# EUROPEAN PATENT APPLICATION

(11) **EP 4 475 500 A1**
(43) Date of publication of application: **11.12.2024**
(21) Application number: 23777904.6
(22) Date of filing: 20.03.2023
(51) Int. Cl.: H04L 27/00

(54) **RESOURCE COEXISTENCE METHOD AND APPARATUS**

(30) Priority: 29.03.2022 CN 202210319594
(71) Applicant: ZTE Corporation, Shenzhen, Guangdong 518057 (CN)
(72) Inventor: BI, Feng, Shenzhen, Guangdong 518057 (CN); LU, Youxiong, Shenzhen, Guangdong 518057 (CN); XING, Weimin, Shenzhen, Guangdong 518057 (CN); MIAO, Ting, Shenzhen, Guangdong 518057 (CN)
(74) Representative: Pennacchio, Salvatore Giovanni
(86) International application number: PCT/CN2023/082584
(87) International publication number: WO 2023/185531

(57) **Abstract**

Provided are a resource coexistence method and an apparatus. The resource coexistence method includes: determining, by a first node, an LTE V2X or NR V2X time-frequency resource to be used in a reporting manner or an autonomous manner. In this embodiment of the present disclosure, the first node determines the LTE V2X or NR V2X time-frequency resource to be used through the reporting manner or the autonomous manner, thereby avoiding a resource conflict or interference caused by the coexistence of LTE V2X and NR V2X resources.

## Description

### Technical Field

Embodiments of the present disclosure relate to the field of communication, and specifically, to a resource coexistence method and apparatus.

### Background

With the continuous improvement of radio technology, a large number of various radio services have emerged. Apart from cellular services between base stations and terminals, systems such as long term evolution (LTE) and new radio (NR) also include services like vehicle to anything (V2X), abbreviated as LTE V2X or LTE-V or LTE sidelink in LTE, and NR V2X or NR-V or NR sidelink in NR. A communication link for V2X services is called a sidelink (SL). When there is a need for service transmission between devices, service data between the devices is transmitted directly from a data source device to a target device without being forwarded by other network devices, namely direct communication between the devices. The device refers to user equipment (UE) with V2X functionality. SL can be categorized into three main communication scenarios: a first scenario (in coverage) where both the data source device and the target device are within the coverage of the base station; a second scenario (partial coverage) where one of the data source device and the target device is within the coverage of the base station while the other device is outside the coverage of the base station; and a third scenario (out of coverage) where both the data source device and the target device are outside the coverage of the base station. SL can also be divided into two main communication modes: a first mode (abbreviated as a mode 3 in LTE and a mode 1 in NR), where a resource for the device to send a sidelink signal comes from the scheduling of the base station; and a second mode (abbreviated as a mode 4 in LTE and a mode 2 in NR), where the device autonomously selects a resource from a network-configured or preconfigured resource pool based on a resource selection strategy. The resource selection strategy mainly includes a sensing mechanism, a partial sensing mechanism, and a random selection mechanism.

In a V2X deployment scenario involved in the latest NR system, it is necessary to consider the coexistence of LTE V2X and NR V2X devices within the same frequency resource, and the same frequency resource generally refers to the same carrier, the same band, etc. To achieve the coexistence of two different types of devices within the same frequency resource, a mechanism is needed to effectively utilize the resource without negatively impacting their operation and to avoid interference during resource coexistence.

### Summary

Embodiments of the present disclosure provide a resource coexistence method and apparatus so as to at least solve the problem of a resource conflict or interference caused by the coexistence of LTE V2X and NR V2X within the same frequency resource in the related art.

According to an embodiment of the present disclosure, a resource coexistence method is provided, and includes: determining, by a first node, an LTE V2X or NR V2X time-frequency resource to be used in a reporting manner or an autonomous manner.

According to another embodiment of the present disclosure, a resource coexistence apparatus is provided, and includes: a determination module, configured to determine an LTE V2X or NR V2X time-frequency resource to be used in a reporting manner or an autonomous manner.

According to another embodiment of the present disclosure, a computer-readable storage medium is further provided, and has a computer program stored therein, where the computer program is configured to perform the steps in any one of the above method embodiments during operation.

According to another embodiment of the present disclosure, an electronic apparatus is further provided, and includes a memory and a processor. The memory has a computer program stored therein, and the processor is configured to operate the computer program so as to perform the steps in any one of the above method embodiments.

### Brief Description of the Drawings

Fig. 1 is a block diagram of a hardware structure of a mobile terminal running a resource coexistence method according to an embodiment of the present disclosure;
Fig. 2 is a schematic flowchart of a resource coexistence method according to an embodiment of the present disclosure;
Fig. 3 is a schematic flowchart of a reporting manner according to an embodiment of the present disclosure;
Fig. 4 is a schematic flowchart of another reporting manner according to an embodiment of the present disclosure;
Fig. 5 is a schematic flowchart of an autonomous manner according to an embodiment of the present disclosure; and
Fig. 6 is a schematic diagram of a module structure of a resource coexistence apparatus according to an embodiment of the present disclosure.

### Detailed Description of the Embodiments

Embodiments of the present disclosure are described in detail with reference to the accompanying drawings and in conjunction with the embodiments as below.

It should be noted that the terms such as "first" and "second" of the specification and claims of the present disclosure, as well as the foregoing accompanying drawings are used to distinguish similar objects but are not necessarily used to describe specific sequences or precedence orders.

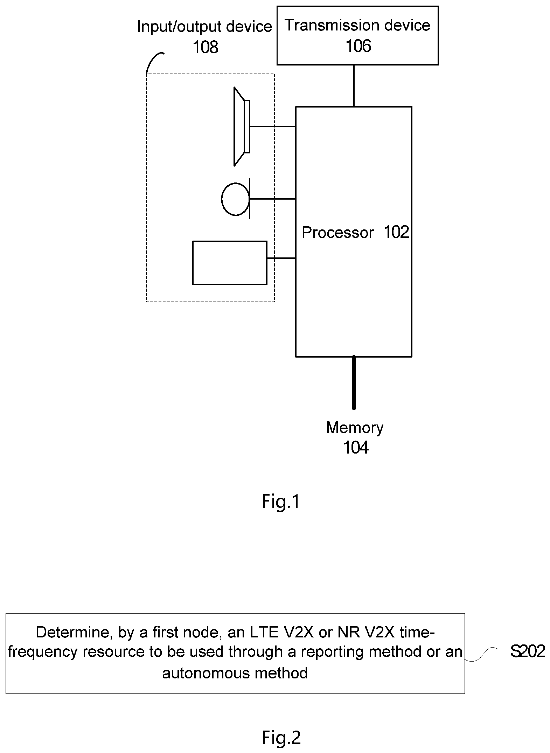

The method embodiments provided by the embodiments of this application may be performed in a mobile terminal, a computer terminal, or a similar arithmetic unit. Taking operation on the mobile terminal as an example, Fig. 1 is a block diagram of a hardware structure of a mobile terminal running a resource coexistence method according to an embodiment of the present disclosure. As shown in Fig. 1, the mobile terminal may include one or more (only one is shown in Fig. 1) processors 102 (the processor 102 may include, but is not limited to, a microcontroller unit (MCU) or a field-programmable gate array (FPGA), or another processing unit) and a memory 104 for storing data, where the mobile terminal may also include a transmission device 106 for a communication function and an input and output device 108. Those of ordinary skill in the art should understand that the structure shown in Fig. 1 is merely illustrative, and does not limit the structure of the above mobile terminal. For example, the mobile terminal may further include more or fewer components than those shown in Fig. 1, or have a different configuration from that shown in Fig. 1.

The memory 104 may be configured to store computer programs, such as software programs and modules of application software, such as a computer program corresponding to the resource coexistence method in this embodiment of the present disclosure. The processor 102 performs various functional applications and data processing by operating the computer program stored in the memory 104, thereby implementing the above method. The memory 104 may include a high-speed random access memory, and may also include a non-volatile memory, such as one or more magnetic storage apparatuses, flash memories, or other nonvolatile solid-state memories. In some examples, the memory 104 may further include memories which are remotely set relative to the processor102, and these remote memories may be connected to the mobile terminal through a network. The examples of the above network include, but are not limited to, an Internet, an intranet, a local area network, a mobile communication network, and a combination thereof.

The transmission device 106 is configured to receive or transmit data through a network. A specific example of the above network may include a wireless network provided by a communication provider of the mobile terminal. In an example, the transmission device 106 includes a network interface controller (NIC) which may be connected with other network devices through a base station so as to communicate with the Internet. In an example, the transmission device 106 may be a radio frequency (RF) module configured to communicate with the Internet in a wireless manner.

This embodiment provides a resource coexistence method operating on the above mobile terminal. Fig. 2 is a flowchart of a method according to an embodiment of the present disclosure. As shown in Fig. 2, the process includes the following steps:
Step S202: Determine, by a first node, an LTE V2X or NR V2X time-frequency resource to be used in a reporting manner or an autonomous manner.

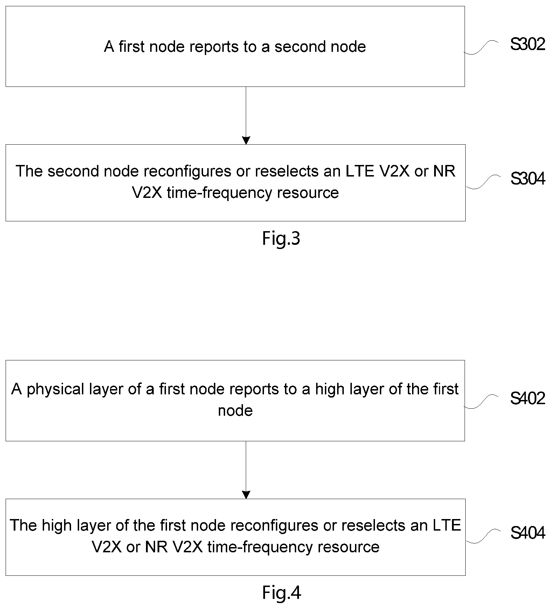

In this embodiment, the reporting manner may include methods shown in Fig. 3 and Fig. 4.

As shown in Fig. 3, the reporting manner includes the following steps:
S302: The first node reports to a second node, where the content of the report may include one of the following: whether there is a resource conflict, the type of resource conflict, whether there is interference, the type of interference, the level of interference, a time-frequency resource location of the interference, a desired or candidate time-frequency resource location, whether to reduce desired power, and a power absolute value or a power relative value of the desired power reduction.
S304: The second node reconfigures or reselects an LTE V2X or NR V2X time-frequency resource.

As shown in Fig. 4, the reporting manner includes the following steps:
S402: A physical layer of the first node reports to a high layer of the first node, where the content of the report may include one of the following: whether there is a resource conflict, the type of resource conflict, whether there is interference, the type of interference, the level of interference, a time-frequency resource location of the interference, a desired or candidate time-frequency resource location, whether to reduce desired power, and a power absolute value or a power relative value of the desired power reduction.
S404: The high layer of the first node reconfigures or reselects an LTE V2X or NR V2X time-frequency resource.

In this embodiment, the type of resource conflict at least includes one of the following: a conflict between LTE V2X transmission and NR V2X transmission resources, a conflict between LTE V2X transmission and NR V2X reception resources, a conflict between LTE V2X reception and NR V2X transmission resources, and a conflict between LTE V2X reception and NR V2X reception resources.

In this embodiment, the type of interference at least includes one of the following: LTE V2X being interfered with by NR V2X, and the NR V2X being interfered with by the LTE V2X.

In an exemplary embodiment, the level of interference is divided through a following method: dividing one or more interference levels based on one or more thresholds, where the threshold at least includes one of the following: received signal power and received signal strength.

In an exemplary embodiment, when the LTE V2X and the NR V2X coexist using a method of time division multiplexing (TDM) and there is a resource conflict or interference between the LTE V2X and the NR V2X, a set of NR V2X time resources is selected from a plurality of sets of preconfigured NR V2X time resources. The divided time resources may include: resources used only for the LTE V2X, resources used only for the NR V2X, and resources used to be shared by the LTE V2X and the NR V2X. The granularity of the time resources at least includes one of the following: a short-slot, a slot, a subframe, a half-frame, and a radio frame.

In an exemplary embodiment, when the LTE V2X and the NR V2X coexist using a method of frequency division multiplexing (FDM) and there is a resource conflict or interference between the LTE V2X and the NR V2X, a set of NR V2X frequency resources is selected from a plurality of sets of preconfigured NR V2X frequency resources. The divided frequency resources may include: resources used only for the LTE V2X, resources used only for the NR V2X, and resources used to be shared by the LTE V2X and the NR V2X. The granularity of the frequency resources at least includes one of the following: a resource block, a resource block group, a bandwidth part, a subchannel, a subband, a carrier, and a band.

In an exemplary embodiment, when the LTE V2X and the NR V2X coexist using frequency division multiplexing, power is allocated for the LTE V2X and the NR V2X using one of the following methods: determining power allocation based on priorities of the LTE V2X and the NR V2X, alternately prioritizing power allocation for the LTE V2X and the NR V2X, prioritizing power allocation for the LTE V2X, and prioritizing power allocation for the NR V2X.

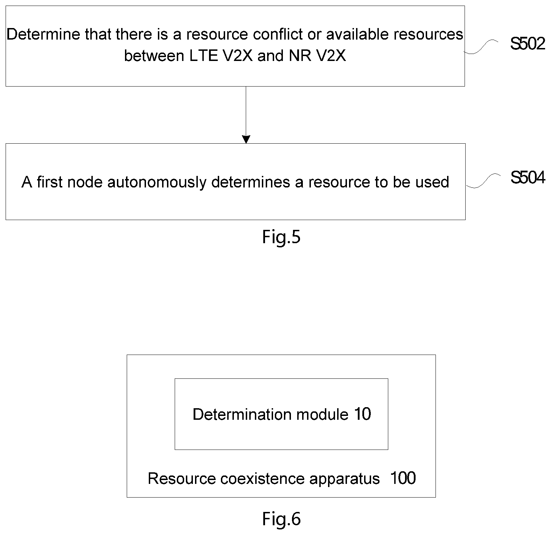

In this embodiment, when there is a resource conflict or available resources between the LTE V2X and the NR V2X, the first node may also adopt the autonomous manner to determine resources to be used. As shown in Fig. 5, the autonomous manner includes the following steps:
S502: Determine that there is a resource conflict or available resources between the LTE V2X and the NR V2X.
S504: Autonomously determine, by the first node, a resource to be used.

Specifically, in an embodiment, an NR V2X module of the first node monitors NR V2X SCI of other nodes and notifies an LTE V2X module of the first node of an available time-frequency resource location. The LTE V2X module of the first node uses the available time-frequency resource.

In another exemplary embodiment, the step of determining, by a first node, an LTE V2X or NR V2X time-frequency resource to be used through an autonomous manner includes: monitoring, by the NR V2X module of the first node, LTE V2X SCI of other nodes to obtain an available time-frequency resource, and using, by the NR V2X module of the first node, the available time-frequency resource.

In another exemplary embodiment, the step of determining, by a first node, an LTE V2X or NR V2X time-frequency resource to be used through an autonomous manner includes: selecting a set of NR V2X time resources from a plurality of sets of preconfigured NR V2X time resources when there is a resource conflict or interference between the LTE V2X and the NR V2X.

In the above embodiments of the present disclosure, when the LTE V2X and the NR V2X coexist within the same frequency resource, the first node determines the LTE V2X or NR V2X time-frequency resource to be used through the reporting manner or the autonomous manner, thereby avoiding the resource conflict or interference caused by the coexistence of LTE V2X and NR V2X resources, and further solving the problems such as power sharing, power control, and power adjustment reporting during coexistence.

To facilitate understanding of the technical solutions provided by the present disclosure, the present disclosure is described in detail in conjunction with specific scenario embodiments below.

### Embodiment 1

In this embodiment, the LTE V2X and the NR V2X coexist using the TDM method. When there is a resource conflict between the LTE V2X and the NR V2X, LTE V2X and NR V2X time resources are reconfigured or reselected.

In this embodiment, there are a plurality of sets of preconfigured NR V2X time resources. When there is a resource conflict between the LTE V2X and the NR V2X, another set of time resources may be selected for the NR V2X with the resource conflict.

In this embodiment, three types of time resource areas may be divided, corresponding to resources used only for the LTE V2X, resources used only for the NR V2X, and resources shared for both the LTE V2X and the NR V2X.

In this embodiment, the preferred granularity of the time resources is a mini-slot or a short-slot, a slot, a subframe, a half-frame, and a radio frame.

### Embodiment 2

In this embodiment, the LTE V2X and the NR V2X coexist using the FDM method. When there is a resource conflict between the LTE V2X and the NR V2X, LTE V2X and NR V2X frequency resources are reconfigured or reselected.

In this embodiment, there are a plurality of sets of preconfigured NR V2X frequency resources. When there is a resource conflict between the LTE V2X and the NR V2X, the NR V2X selects another set of frequency resources to avoid the resource conflict.

In this embodiment, three types of frequency resource areas may be divided, corresponding to resources used only for the LTE V2X, resources used only for the NR V2X, and resources shared for both the LTE V2X and the NR V2X.

In this embodiment, the preferred granularity of the frequency resources is a resource block, a resource block group, a bandwidth part, a subchannel, a subband, a carrier, and a band.

In this embodiment, when the LTE V2X and the NR V2X coexist using the FDM, power is allocated using one of the following methods:
determining power allocation based on priorities of the LTE V2X and the NR V2X, namely first allocating power to the V2X with a higher priority;
alternately prioritizing power allocation for the LTE V2X and the NR V2X, namely prioritizing power allocation for a certain V2X from the LTE V2X and the NR V2X last time, and then prioritizing power allocation for the other V2X next time;
prioritizing power allocation for the LTE V2X; and
prioritizing power allocation for the NR V2X.

### Embodiment 3

In this embodiment, device assistance is adopted to avoid the resource conflict or interference caused by the coexistence of LTE V2X and NR V2X resources.

Specifically, a second device measures a service load condition and reports the service load condition to a first device (a base station or a terminal device), or a physical layer of the second device reports the service load condition to a high layer above the physical layer of the second device, and the high layer of the first device or the second device reconfigures or reselects the LTE V2X and NR V2X resources.

In this embodiment, the service load condition may be determined by measuring a channel busy ratio (CBR) or evaluating a channel occupancy ratio (CR).

In this embodiment, the content reported by the second device may include at least one of the following: whether there is a resource conflict, the type of resource conflict, whether there is interference, the type of interference, the level of interference, a time-frequency resource location of the interference, a desired or candidate time-frequency resource location, whether to reduce desired power, and a power absolute value or a power relative value of the desired power reduction.

### Embodiment 4

In this embodiment, available resources are used for the LTE V2X to avoid the resource conflict or interference caused by the coexistence of LTE V2X and NR V2X resources.

Specifically, the NR V2X module decodes SCI used for scheduling the NR V2X and determines whether there are available resources in subsequent resources based on a monitoring result. The LTE V2X module obtains the monitoring result, such as whether there are available subchannel resources. If available, these resources are used for LTE V2X transmission.

Alternatively, the NR V2X module decodes NR V2X SCI of other nodes, and the LTE V2X module decodes LTE V2X SCI of the other nodes. The NR V2X module combines monitoring results, and the LTE V2X module obtains the monitoring results, such as whether there are available subchannel resources. If available, these resources are used for LTE V2X transmission.

### Embodiment 5: Available resources for the NR V2X

In this embodiment, the NR V2X module decodes SCI used for scheduling the LTE V2X and determines whether there are available resources in subsequent resources based on a monitoring result, such as whether there are available subchannel resources. If available, these resources are used for NR V2X transmission.

Alternatively, the NR V2X module decodes LTE V2X SCI of other nodes, and the NR V2X module decodes NR V2X SCI of the other nodes. The LTE V2X module decodes LTE V2X SCI of the other nodes. The NR V2X module combines monitoring results, and determines whether there are available resources in subsequent resources based on the monitoring results, such as whether there are available subchannel resources. If available, these resources are used for NR V2X transmission.

It should be noted that in the above embodiments of the present disclosure, SCI decoding, SCI monitoring, and sensing are all equivalent concepts.

According to the descriptions in the foregoing implementations, those skilled in the art can clearly know that the method according to the foregoing embodiments may be implemented by software and a necessary general-purpose hardware platform, and certainly may also be implemented by hardware, but the former is a preferred implementation in many cases. Based on such understanding, the technical solution of the present disclosure essentially or parts making contribution to the prior art may be embodied in the form of a software product. A computer software product is stored in a storage medium (e.g., a ROM/RAM, a magnetic disk, and a compact disc), which includes a plurality of instructions used for enabling one terminal device (which may be a mobile phone, a computer, a server, or a network device, etc.) to perform the method according to various embodiments of the present disclosure.

In this embodiment, a resource coexistence apparatus is further provided. The apparatus is used to implement the above embodiments and preferred implementations, and details that have been described are not repeated. The term "module" used as below may implement a combination of software and/or hardware with preset functions. An apparatus described in the following embodiments is preferably implemented by the software, but it is possible and conceivable for implementing the apparatus through the hardware or a combination of the software and the hardware.

Fig. 6 is a block diagram of a module structure of a resource coexistence apparatus according to an embodiment of the present disclosure. As shown in Fig. 6, the apparatus 100 includes a determination module 10.

The determination module 10 is configured to determine an LTE V2X or NR V2X time-frequency resource to be used in a reporting manner or an autonomous manner.

In this embodiment, the content of the report may at least include one of the following: whether there is a resource conflict, the type of resource conflict, whether there is interference, the type of interference, the level of interference, a time-frequency resource location of the interference, a desired or candidate time-frequency resource location, whether to reduce desired power, and a power absolute value or a power relative value of the desired power reduction.

In this embodiment, the type of resource conflict at least includes one of the following: a conflict between LTE V2X transmission and NR V2X transmission resources, a conflict between LTE V2X transmission and NR V2X reception resources, a conflict between LTE V2X reception and NR V2X transmission resources, and a conflict between LTE V2X reception and NR V2X reception resources.

It should be noted that the above modules may be implemented through the software or the hardware, and for the latter, the modules may be implemented by following methods including but not limited to: the above modules are all located in the same processor; or the above modules are respectively located in different processors in the form of any combination.

The embodiments of the present disclosure further provide a computer-readable storage medium having a computer program stored therein, where the computer program is configured to perform the steps in any one of the above method embodiments during operation.

In an exemplary embodiment, the above computer-readable storage medium may include, but is not limited to: a U disk, a read-only memory (ROM for short), a random access memory (RAM for short), a mobile hard disk, a magnetic disk, a compact disc, or other media capable of storing computer programs.

The embodiments of the present disclosure further provide an electronic apparatus including a memory and a processor. The memory has a computer program stored therein, and the processor is configured to run the computer program so as to perform the steps in any one of the above method embodiments.

In an exemplary embodiment, the above electronic apparatus may further include a transmission device and an input and output device. The transmission device is connected with the above processor, and the input and output device is connected with the above processor.

For specific examples in this embodiment, reference may be made to the examples described in the above embodiments and exemplary implementations, which will not be described in detail in this embodiment.

Obviously, those skilled in the art should understand that the modules or steps in the embodiments of the present disclosure may be implemented through a general-purpose computing device, which may be centralized on a single computing device or distributed over a network formed by a plurality of computing devices, and may be implemented by executable program code of the computing device, such that the modules or steps may be stored in a storage apparatus to be performed by the computing device; and in some cases, the shown or described steps may be performed in a different order than presented here, or the modules or steps may be made into various integrated circuit modules, or more of the modules or steps may be made into a single integrated circuit module to be implemented. Therefore, the present disclosure is not limited to any specific hardware and software combination.

The foregoing contents are merely preferred embodiments of the present disclosure, but are not intended to limit the present disclosure. Those skilled in the art may make various modifications and variations to the present disclosure. Any modification, equivalent replacement, improvement, etc., made within the principle of the present disclosure shall fall within the scope of protection of the present disclosure.

## Claims

1. A resource coexistence method, comprising:
determining, by a first node, an LTE V2X or NR V2X time-frequency resource to be used in a reporting manner or an autonomous manner.

2. The method according to claim 1, wherein the reporting manner comprises:
the first node reporting to a second node or a physical layer of the first node reporting to a high layer of the first node, wherein the content of the report at least comprises one of the following:
whether there is a resource conflict;
the type of resource conflict;
whether there is interference;
the type of interference;
the level of interference;
a time-frequency resource location of the interference;
a desired or candidate time-frequency resource location;
whether to reduce desired power; and
a power absolute value or a power relative value of the desired power reduction.

3. The method according to claim 2, wherein the type of resource conflict at least comprises one of the following: a conflict between LTE V2X transmission and NR V2X transmission resources, a conflict between LTE V2X transmission and NR V2X reception resources, a conflict between LTE V2X reception and NR V2X transmission resources, and a conflict between LTE V2X reception and NR V2X reception resources.

4. The method according to claim 2, wherein the type of interference at least comprises one of the following: LTE V2X being interfered with by NR V2X, and the NR V2X being interfered with by the LTE V2X.

5. The method according to claim 2, wherein the level of interference is divided through a following method: dividing one or more interference levels based on one or more thresholds, wherein the threshold at least comprises one of the following: received signal power and received signal strength.

6. The method according to claim 3 or 4, wherein after the first node reports to a second node or a physical layer of the first node reports to a high layer of the first node, the method further comprises:
reconfiguring or reselecting, by the high layer of the second node or the first node, an LTE V2X or NR V2X time-frequency resource.

7. The method according to claim 6, wherein the reconfiguring or reselecting, by the high layer of the second node or the first node, an LTE V2X or NR V2X time-frequency resource comprises:
selecting a set of NR V2X time resources from a plurality of sets of preconfigured NR V2X time resources when there is a resource conflict or interference between the LTE V2X and the NR V2X.

8. The method according to claim 7, wherein divided time resources comprise: resources used only for the LTE V2X, resources used only for the NR V2X, and resources used to be shared by the LTE V2X and the NR V2X.

9. The method according to claim 8, wherein the granularity of the time resources at least comprises one of the following: a short-slot, a slot, a subframe, a half-frame, and a radio frame.

10. The method according to claim 6, wherein the reconfiguring or reselecting, by the high layer of the second node or the first node, an LTE V2X or NR V2X time-frequency resource comprises:
selecting a set of NR V2X frequency resources from a plurality of sets of preconfigured NR V2X frequency resources when there is a resource conflict or interference between the LTE V2X and the NR V2X.

11. The method according to claim 10, wherein divided frequency resources comprise: resources used only for the LTE V2X, resources used only for the NR V2X, and resources used to be shared by the LTE V2X and the NR V2X.

12. The method according to claim 11, wherein the granularity of the frequency resources at least comprises one of the following: a resource block, a resource block group, a bandwidth part, a subchannel, a subband, a carrier, and a band.

13. The method according to claim 2, wherein when the LTE V2X and the NR V2X coexist using frequency division multiplexing, power is allocated for the LTE V2X and the NR V2X using one of the following methods:
determining power allocation based on priorities of the LTE V2X and the NR V2X;
alternately prioritizing power allocation for the LTE V2X and the NR V2X;
prioritizing power allocation for the LTE V2X; and
prioritizing power allocation for the NR V2X.

14. The method according to claim 1, wherein the determining, by a first node, an LTE V2X or NR V2X time-frequency resource to be used through an autonomous manner comprises:
selecting a set of NR V2X time resources from a plurality of sets of preconfigured NR V2X time resources when there is a resource conflict or interference between the LTE V2X and the NR V2X.

15. The method according to claim 1, wherein the determining, by a first node, an LTE V2X or NR V2X time-frequency resource to be used through an autonomous manner comprises:
monitoring, by an NR V2X module of the first node, NR V2X SCI of other nodes and notifying an LTE V2X module of the first node of an available time-frequency resource location; and
using, by the LTE V2X module of the first node, the available time-frequency resource.

16. The method according to claim 1, wherein the determining, by a first node, an LTE V2X or NR V2X time-frequency resource to be used through an autonomous manner comprises:
monitoring, by the NR V2X module of the first node, LTE V2X SCI of other nodes to obtain an available time-frequency resource; and
using, by the NR V2X module of the first node, the available time-frequency resource.

17. A resource coexistence apparatus, comprising:
a determination module, configured to determine an LTE V2X or NR V2X time-frequency resource to be used in a reporting manner or an autonomous manner.

18. The apparatus according to claim 17, wherein the content of the report at least comprises one of the following:
whether there is a resource conflict;
the type of resource conflict;
whether there is interference;
the type of interference;
the level of interference;
a time-frequency resource location of the interference;
a desired or candidate time-frequency resource location;
whether to reduce desired power; and
a power absolute value or a power relative value of the desired power reduction.

19. The method according to claim 18, wherein the type of resource conflict at least comprises one of the following: a conflict between LTE V2X transmission and NR V2X transmission resources, a conflict between LTE V2X transmission and NR V2X reception resources, a conflict between LTE V2X reception and NR V2X transmission resources, and a conflict between LTE V2X reception and NR V2X reception resources.

20. A computer-readable storage medium, having a computer program stored therein, wherein the computer program is configured to, when executed by a processor, cause the processor to implement the steps of the method as claimed in any one of claims 1 to 16.

21. An electronic apparatus, comprising a memory, a processor, and a computer program stored on the memory and runnable on the processor, wherein the processor is configured to execute the computer program to implement the steps of the method as claimed in any one of claims 1 to 16.
